(19) **Europäisches Patentamt**
**European Patent Office**
**Office européen des brevets**

(11) **EP 1 569 945 B1**

(12) **FASCICULE DE BREVET EUROPEEN**

(45) Date de publication et mention
de la délivrance du brevet:
**12.08.2009 Bulletin 2009/33**

(51) Int Cl.:
*C07F 7/16* (2006.01)    *B01J 23/78* (2006.01)
*B01J 23/80* (2006.01)    *B01J 23/835* (2006.01)
*B01J 27/122* (2006.01)    *B01J 27/14* (2006.01)

(21) Numéro de dépôt: **03815083.5**

(22) Date de dépôt: **08.12.2003**

(86) Numéro de dépôt international:
**PCT/FR2003/003613**

(87) Numéro de publication internationale:
**WO 2004/063206 (29.07.2004 Gazette 2004/31)**

(54) **COMPOSITION CATALYTIQUE A BASE DE CUIVRE, PHOSPHORE ET METAL ALCALIN POUR LA SYNTHESE DIRECTE D'ALKYLHALOGENOSILANES**

KATALYTISCHE, AUF KUPFER, PHOSPHOR UNDALKALIMETALL BASIERENDE ZUSAMMENSETZUNG ZUR DIREKTEN SYNTHESE VONALKYLHALOGENOSILANEN

CATALYTIC COMPOSITION BASED ON COPPER, PHOSPHORUS AND ALKALI METAL FOR THE DIRECT SYNTHESIS OF ALKYLHALOGENOSILANES

(84) Etats contractants désignés:
**AT BE BG CH CY CZ DE DK EE ES FI FR GB GR HU IE IT LI LU MC NL PT RO SE SI SK TR**

(30) Priorité: **09.12.2002 FR 0215532**

(43) Date de publication de la demande:
**07.09.2005 Bulletin 2005/36**

(73) Titulaire: **Bluestar Silicones France**
**69486 Lyon (FR)**

(72) Inventeur: **COLIN, Pascale**
**F-69680 CHASSIEU (FR)**

(56) Documents cités:
**EP-A- 0 138 679**        **EP-A- 1 156 051**
**WO-A-01/30786**          **US-A- 4 645 851**
**US-A- 4 661 613**        **US-A- 5 117 030**
**US-B1- 6 423 860**

Remarques:
Le dossier contient des informations techniques présentées postérieurement au dépôt de la demande et ne figurant pas dans le présent fascicule.

## Description

La présente invention a pour objet l'utilisation d'une composition de matière comprenant du cuivre, un métal alcalin et du phosphore comme composition catalytique spécialement destinée à la synthèse directe d'alkylhalogénosilanes par mise en contact d'un halogénure d'alkyle avec du silicium et permettant de conduire cette synthèse directe en atténuant sensiblement la formation de coke.

Le procédé industriel de fabrication d'alkylhalogénosilanes et, par exemple, de diméthyldichlorosilane dénommé par la suite DMDCS est un procédé bien connu qui est décrit notamment dans le brevet des Etats-Unis d'Amérique US-A-2 380 995, ainsi que dans l'ouvrage de Walter NOLL, Chemistry and Technology of Silicones, 1968 , édition Académie Press Inc., LONDON, pages 26-41.

Selon ce procédé dit de "synthèse directe" ou "synthèse de Rochow", on fabrique directement les alkylhalogénosilanes, par exemple le DMDCS, par réaction du chlorure de méthyle sur une masse de contact solide formée de silicium et d'un catalyseur comprenant du cuivre, suivant la reaction :

$$2CH_3Cl + Si \rightarrow (CH_3)_2SiCl_2.$$

En réalité il se forme au cours de la synthèse directe d'autres co-produits tels que notamment ceux mentionnés ci-après : d'autres alkylhalogénosilanes comme le méthyltrichlorosilane $CH_3SiCl_3$ dénommé par la suite MTCS et le triméthylchlorosilane $(CH_3)_3SiCl$ dénommé par la suite TMCS ; des alkylhydrogénosilanes halogénées comme par exem-ple le méthylhydrogénodichlorosilane $(CH_3)HSiCl_2$ dénommé par la suite MHDCS ; et des produits lourds qui sont des polysilanes, et en particulier des disilanes comme par exemple le triméthyltrichlorodisilane $(CH_3)_3Si_2Cl_3$ et le diméthyl-tétrachlorodisilane$(CH_3)_2Si_2Cl_4$.

Parmi tous les produits obtenus par synthèse directe, le dialkyldihalogénosilane et, par exemple le DMDCS, est le principal produit, c'est à dire le produit obtenu en quantité majoritaire. Ce produit est très recherché car, après hydrolyse et polymérisation, il permet d'obtenir des huiles et des gommes qui sont des produits de base pour la fabrication des silicones.

Il est connu d'utiliser le cuivre, pris sous forme de cuivre métallique ou sous forme de composés chimiques à base de cuivre, comme catalyseur de la réaction de synthèse directe.

De façon, notamment, à :

- améliorer l'activité moyenne (dénommée également productivité) de la masse de contact comprenant l'ensemble à base de silicium et de catalyseur, cette activité (ou productivité) étant évaluée en poids des silanes obtenus par heure et par kilogramme de silicium initialement engagé,
- améliorer également la sélectivité en dialkyldihalogénosilane et, par exemple en DMDCS, évaluée par exemple par le % molaire de DMDCS par rapport à la totalité des silanes obtenus et par le rapport pondéral moyen MTCS/ DMDCS, et
- abaisser la teneur pondérale en produits « lourds » par rapport aux silanes obtenus,

on a déjà proposé de rajouter au cuivre un ensemble promoteur comportant un ou plusieurs additif(s) promoteur(s). Ces additifs peuvent être - le zinc ou un halogénure de zinc (brevet US-A-2 464 033), l'aluminium (brevets US-A-2 403 370 et 2 427 605), l'étain, le manganèse, le nickel et l'argent (brevet britannique GB-A-1 207 466), le cobalt (brevet britannique GB-A-907 161), le chlorure de potassium (brevet soviétique SU-A-307 650), l'arsenic ou un composé de l'arsenic (brevet US-A-4 762 940).

Dans les brevets européens EP-A-0 138 678 et EP-A-0 138 679, on décrit l'utilisation d'un catalyseur au cuivre en mélange avec un ensemble promoteur amélioré qui renferme :

- 30 à 1 000 ppm (calculés en poids de métal par rapport à la masse de silicium engagée) d'au moins un métal choisi parmi l'étain et l'antimoine ou d'un composé à base d'étain et/ou d'antimoine,
- éventuellement 0,1 à 3 % (calculés comme indiqué ci-avant) de zinc métallique ou d'un composé à base de zinc, et
- dans le cas de EP-A-0 138 678 : 0,05 à 4 % (calculés comme indiqué ci-avant) de césium ou d'un composé du césium, pris seul ou en mélange avec au moins un autre alcalin choisi parmi le lithium, le sodium, le potassium, le rubidium et un composé à base dudit métal alcalin ; ou dans le cas de EP-A-0 138 679: 0,05 à 2 % (calculés comme indiqué ci-avant) d'au moins un alcalin choisi parmi le lithium, le sodium, le potassium, le rubidium et un composé à base dudit même métal alcalin.

Dans le brevet américain US-A-4 601 102, on décrit l'utilisation d'un catalyseur au cuivre en mélange avec un autre ensemble promoteur amélioré qui renferme :

- 5 à 200 ppm (calculés en poids de métal par rapport à la masse de silicium engagée) d'étain ou d'un composé à base d'étain,
- éventuellement 100 à 10 000 ppm (calculés comme indiqué ci-avant) de zinc métallique ou d'un composé à base de zinc, et
- 25 à 931 ppm (calculés comme indiqué ci-avant) de phosphore élémentaire, d'un phosphure métallique et/ou d'un composé apte à fournir un phosphure métallique dans la masse réactionnelle de la synthèse directe.

Cependant, malgré tout l'intérêt des compositions catalytiques (catalyseur au cuivre en mélange avec un ensemble promoteur) proposées dans l'art antérieur précité, les recherches continuent dans ce domaine car les conditions de mise en oeuvre industrielles du procédé de synthèse directe donnent naissance, de manière connue en soi [cf. Journal of Catalysis 161, 861-886 (1996)], à des réactions parasites de cracking de l'halogénure d'alkyle de départ, réactions parasites qui conduisent à la formation de coke et d'hydrocarbures. Cette formation de coke est à l'origine, notamment, de l'encrassement du (ou des) réacteur(s) de synthèse directe à l'intérieur desquels il se fixe des dépôts de coke. Cet encrassement indésirable oblige à réaliser des opérations périodiques de nettoyage, ce qui diminue d'autant la capacité de production de l'installation.

La demande internationale WO2004/063205 (EP 1 569 944 A1), dont les dates de dépôt internationale et de priorité sont identiques à celles de la demande (EP 1 569 945 A1) à l'origine du présent brevet, décrit des compositions catalytiques et un procédé de préparation d'alkylhalogénosilanes par réaction d'un halogénure d'alkyle avec une masse solide, tels qu'initialement revendiqués dans la demande EP 1 569 945 A1. L'utilisation de la composition catalytique pour baisser la formation du coke indésirable lors de la mise en oeuvre d'un procédé de halogénure d'alkyle avec une masse solide n'est pas explicitement évoquée.

La Demanderesse a maintenant trouvé que l'utilisation de compositions catalytiques appropriées comportant un ensemble promoteur où sont présents des additifs à base de métal alcalin et de phosphore, permettent de conduire la synthèse directe en maîtrisant à la baisse la formation du coke indésirable.

Selon la présente invention telle que définie dans les revendications, il s'agit donc de l'utilisation d'une composition catalytique appropriée pour la mise en oeuvre du procédé de préparation d'alkylhalogénosilanes par réaction d'un halogénure d'alkyle, de préférence $CH_3Cl$, avec une masse solide, dite masse de contact, formée de silicium et d'une composition catalytique comportant ($\alpha$) du cuivre métallique ou un composé à base de cuivre, et ($\beta$) un ensemble promoteur.

Plus précisément, la présente invention concerne l'utilisation d'une composition catalytique comportant ($\alpha$) du cuivre métallique ou un composé à base de cuivre, et ($\beta$) un ensemble promoteur comprenant :

- 10 à 500 ppm (calculés en poids de métal par rapport à la masse de silicium engagée) d'un additif $\beta1$ choisi parmi l'étain, un composé à base d'étain et un mélange de ces espèces,
- 0,01 à 2 % (calculés en poids de métal par rapport à la masse de silicium engagée) d'un additif $\beta3$ choisi parmi le césium, le potassium et le rubidium, un composé à base dudit métal alcalin et un mélange de ces espèces, et
- 50 à 3000 ppm (calculés en poids de phosphore élémentaire par rapport à la masse de silicium engagée) d'un additif $\beta4$ choisi parmi l'élément phosphore, un composé à base de phosphore et un mélange de ces espèces, et
- éventuellement 0,01 à 3 % (calculés en poids de métal par rapport à la masse de silicium engagée) d'un additif $\beta2$ choisi parmi le zinc métallique, un composé à base de zinc et un mélange de ces espèces.

Dans la présente invention, l'indicateur qui a été choisi pour apprécier quantitativement la formation de coke indésirable est, dans le cas par exemple où l'halogénure d'alkyle de départ est le $CH_3Cl$, le % massique en MHDCS par rapport à la totalité des silanes obtenus dans la synthèse directe. Le cracking de l'halogénure d'alkyle de départ se fait, dans le cas par exemple du chlorure de méthyle, suivant la réaction (non équilibrée) suivante :

$$CH_3Cl \rightarrow C(coke) + H_2 + CH_4$$

Et il est connu que plus il y a de cracking, plus la quantité de MHDCS qui est en relation directe avec la production d'hydrogène, est importante.

Le catalyseur ($\alpha$) peut être utilisé à une teneur pondérale allant de 1 à 20 %, de préférence allant de 2 à 12 % par rapport à la masse de silicium engagée.

On peut utiliser, à la place du cuivre métallique, à titre de composé du cuivre, notamment : un halogénure de cuivre comme par exemple le chlorure cuivreux ou le chlorure cuivrique ; un carboxylate de cuivre comme par exemple le formiate cuivreux, le formiate cuivrique, l'acétate cuivreux ou l'acétate cuivrique ; un oxyde de cuivre comme par exemple $Cu_2O$ ou $CuO$.

On a mis en évidence, conformément à la présente invention, que l'on obtient de meilleurs résultats, notamment en sélectivité et en taux de transformation du silicium, si on introduit le cuivre sous forme de cuivre métallique et/ou sous forme de chlorure cuivreux.

La teneur pondérale en étain et/ou en composé de l'étain (additif promoteur obligatoire β1 dont la teneur est calculée en poids d'étain métal) se situe dans l'intervalle allant de 10 à 500 ppm et, de préférence, allant de 30 à 300 ppm par rapport à la masse de silicium engagée.

Il est nécessaire d'avoir au moins 10 ppm d'étain métal. On a en effet constaté conformément à l'invention que les effets bénéfiques des additifs promoteurs β3 à base d'un métal alcalin et/ou d'un composé d'un métal alcalin et éventuellement β4 à base de phosphore, ne sont obtenus qu'en présence d'étain et/ou d'un composé de l'étain. En outre une teneur pondérale supérieure à 500 ppm aurait un effet néfaste sur la réaction et notamment sur la sélectivité

Comme composé à base d'étain, on utilise par exemple le chlorure d'étain. L'additif promoteur β1 qui est utilisé de préférence est l'étain métal ; avantageusement cet étain métallique peut être ajouté sous forme de bronze.

Selon le mode de réalisation défini supra, la composition catalytique contient éventuellement un additif promoteur β2 à base de zinc métallique et/ou d'un composé du zinc ; quand on utilise un pareil additif promoteur, c'est de préférence le zinc métallique et/ou le chlorure de zinc.

Le zinc, quand on l'utilise, est présent à une teneur pondérale située dans l'intervalle allant de 0,01 à 3 %, de préférence allant de 0,02 à 0,5 %, (calculée en zinc métal par rapport au poids de silicium engagé).

La teneur pondérale en métal alcalin et/ou en composé de métal alcalin (additif promoteur obligatoire β3 dont la teneur est calculée en alcalin métal) se situe dans l'intervalle allant de 0,01 à 2 % en poids et, de préférence, allant de 0,05 à 1,0 % en poids. Au dessous de 0,01 % en poids l'action du métal alcalin n'est pas vraiment décelable et au-dessus de 2 % en poids, le métal alcalin n'a pas l'effet attendu sur la sélectivité.

Comme composé de métal alcalin choisi parmi le Cs, le K et le Rb, on peut utiliser : les halogénures et par exemple le chlorure ; les carboxylates et par exemple le formiate ou l'acétate. Le chlorure de césium, le chlorure de potassium, le chlorure de rubidium et/ou un mélanges de ces composés sont les additifs promoteurs β3 qui sont utilisés de préférence.

Selon le mode de réalisation défini supra, la composition catalytique contient encore un additif promoteur β4 à base de phosphore et/ou d'un composé du phosphore. Quand on utilise un pareil additif promoteur, et il s'agit là d'une mesure préférentielle de mise en oeuvre de l'invention dans le cas où l'on opère sans faire appel à un additif β2 à base de zinc et/ou d'un composé du zinc, la teneur pondérale en phosphore élémentaire et/ou en composé à base de phosphore (additif promoteur β4 dont la teneur est calculée en poids de phosphore élémentaire) se situe dans l'intervalle allant de 50 à 3000 ppm et, de préférence, allant de 80 à 1500 ppm et, plus préférentiellement encore, allant de 90 à 800 ppm. Au dessous de 50 ppm l'action du phosphore n'est pas vraiment décelable et au-dessus de 3000 ppm, le phosphore a un effet poison qui abaisse la sélectivité.

Le phosphore qui est utilisé dans la présente invention comme additif promoteur peut être du phosphore élémentaire, tel que par exemple le phosphore rouge, le phosphore blanc et le phosphore noir. Comme composé à base de phosphore, on peut utiliser: les phosphures métalliques et par exemple le phosphure d'aluminium, le phosphure de calcium $Ca_3P_2$, le phosphure de cuivre $Cu_3P$, le phosphure de nickel $NiP_2$, le phosphure de d'étain $SnP$, les phosphures de fer $FeP$, $Fe_2P$ et $Fe_3P$, les phosphures de zinc $Zn_3P_2$ et $ZnP_2$, le phosphure de silicium ; les composés à base de phosphore aptes à former des phosphures métalliques, du type de ceux précités, lors de la réaction de synthèse directe entre l'halogénure d'alkyle et la masse de contact à base de silicium et de la composition catalytique ($\alpha$) + ($\beta$). Comme autre composé à base de phosphore, on peut utiliser encore certains alliages qui sont connus pour contenir à la fois du phosphore et une partie métallique et sont aisément disponibles dans le commerce et par exemple les alliages cuivre-phosphore qui contiennent environ de 7 à 15 % en poids de phosphore. Le phosphure de cuivre $Cu_3P$ et les alliages cuivre-phosphore sont les additifs promoteurs β4, quand on choisit d'en utiliser un, qui sont engagés de préférence.

Quand un additif promoteur β4 est utilisé, on fait en sorte que, de manière plus préférentielle, les quantités des additifs β3 et β4 soient choisies à l'intérieur des zones de variation générale et préférée précitées de manière à ce que le rapport :

$$\frac{\text{nombre d'atome-grammes d'alcalin métal}}{\text{nombre d'atome-grammes de phosphore élémentaire}}$$

varie de 1 à 20, de préférence de 1,2 à 15 et, plus préférentiellement encore, de 1,5 à 12.

Pour le reste, il est souhaitable que la dimension particulaire du silicium soit telle que le diamètre moyen d'au moins 50 % en poids des particules soit compris entre 10 et 500 $\mu$m et, de préférence, entre 60 et 200 $\mu$m. De même le catalyseur ($\alpha$) et le groupe de promoteurs ($\beta$) se trouvent également sous forme de particules dont le diamètre moyen d'au moins 50 % en poids des particules est avantageusement compris entre 1 et 100 $\mu$m

Le procédé de synthèse directe peut être mis en oeuvre de façon générale dans un des trois types d'appareillages suivants : un réacteur du type à lit agité comme celui décrit dans le brevet des Etats-Unis d'Amérique US-A-2 449 821, un réacteur du type à lit fluidisé comme celui décrit dans le brevet des Etats-Unis d'Amérique US-A-2 389 931 ou dans un four rotatif.

Les ingrédients constitutifs de la composition catalytique ($\alpha$) + ($\beta$) peuvent être également utilisés déposés sur une matière minérale en particules comme le sable, la silice broyée, le gel de silice, l'alumine, la brique réfractaire broyée, les catalyseurs pour le craquage du pétrole, des zéolites et des argiles calcinées comme décrit dans le brevet français FR-A-1 545 407.

La réaction de synthèse directe a lieu à une température se situant dans l'intervalle allant de 280 à 400°C et, de préférence, allant de 300 à 380 °C. Elle peut être conduite, en tout ou partie, sous une pression absolue d'halogénure d'alkyle égale à la pression atmosphérique (1 bar) ou supérieure à la pression atmosphérique ; quand on se situe dans ce dernier cas, on travaille généralement sous une pression absolue allant de 1,1 à 8 bars et ,de préférence, allant de 1,5 à 4 bars.

Pour la conduite de la réaction de synthèse directe, on réalise avantageusement au préalable, comme cela est bien connu, une étape initiale d'activation de la masse de contact (formée par l'ensemble à base de silicium + catalyseur + promoteurs) ; un des moyens d'activation qui convient bien peut consister à porter ladite masse de contact à une certaine température qui peut être inférieure ou supérieure de quelques degrés à quelques dizaines de degrés à la température choisie pour la réaction de synthèse directe et située dans l'intervalle général ou préférentiel mentionné supra.

En utilisant la composition catalytique ($\alpha$) + ($\beta$) selon l'invention, on peut obtenir par exemple, lorsque la réaction est mise en oeuvre, en lit agité comme en lit fluidisé, à une température allant de 280°C à 400°C et, de préférence, allant de 300 à 380 °C, un % massique en MHDCS par rapport à la totalité des silanes obtenus dans la synthèse directe (indicateur qui a été choisi pour apprécier quantitativement la formation de coke indésirable) qui peut être aussi faible que 0,15 % en poids ; ce % massique en MHDCS est généralement inférieur à 0,60 % en poids.

Les niveaux de valeur obtenus en matière de % massique en MHDCS par rapport à la totalité des silanes obtenus dans la synthèse directe, dans les proportions telles que celles mentionnées ci-avant, apparaissent comme particulièrement surprenantes vis-à-vis des enseignements de l'art antérieur qui sont restés complètement muets jusqu'à ce jour sur la nature des compositions catalytiques qui permettent de conduire la synthèse directe en maîtrisant à la baisse la formation du coke indésirable.

D'autres avantages et caractéristiques de la présente invention apparaîtront à la lecture des exemples suivants donnés à titre illustratif mais nullement limitatif.

S'agissant de l'activité moyenne de la composition catalytique, elle est par exemple de l'ordre ou supérieure à 300 g de silanes/h/kg Si, pouvant atteindre 335 g de silanes/h/kg Si et plus.

S'agissant de la sélectivité, évaluée par exemple par le % molaire moyen de DMDCS par rapport à la totalité des silanes obtenus et par le rapport pondéral moyen MTCS/DMDCS :

- % molaire moyen de DMDCS : la valeur obtenue est de l'ordre ou supérieur à 90 %, pouvant atteindre 93 % et plus,
- rapport pondéral moyen MTCS/DMDCS : : la valeur obtenue est de l'ordre ou inférieur à 0,05, pouvant atteindre 0,035 et encore moins.

S'agissant du pourcentage de lourds formés par rapport aux silanes obtenus, il peut être aussi faible que 1,5 % en poids, et il est généralement inférieur à 3 % en poids.

Dans les exemples suivants, sauf mention contraire, on utilise un réacteur pilote cylindrique de diamètre intérieur 60 mm et de hauteur 250 mm, muni à sa base d'un distributeur de gaz en verre fritté. Le silicium et la composition catalytique sont chargés sous forme d'une poudre dont la taille moyenne d'au moins 50 % en poids des particules est comprise entre 60 et 200 $\mu$m. La réaction s'effectue en lit agité et le réacteur est muni d'un élément chauffant extérieur.

EXEMPLES :

EXEMPLE 1 (Essai comparatif)

Composition catalytique : Cu/Sn/Cs

Dans un réacteur vertical, cylindrique, en verre, muni d'un agitateur métallique et d'un distributeur de gaz en verre fritté, on charge une poudre constituée de : 210 g de silicium, 16,4 g de CuCl, 0,38 g de bronze contenant 10 % en poids d'étain et 1,9 g de CsCl.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h pendant 8 heures, l'essais se déroule à pression atmosphérique.

Cet essai a produit des silanes avec une productivité ou activité moyenne de 302 g de silanes par heure et par kg de Si chargé initialement dans le réacteur.

Le mélange produit est analysé par chromatographie en phase vapeur, et il est caractérisé par :

- un % massique en MHDCS de 0,25 %,
- un % molaire moyen de DMDCS de 92,4 %.

Le ratio MTCS/DMDCS obtenu est égal à 0.040 (% pondéral / % pondéral).

La proportion de "lourds" (polysilanes) obtenue s'élève à 2,3 % en poids.

<u>EXEMPLE 2</u> (Essai comparatif)

Composition catalytique : Cu/Zn/Sn/Cs

Dans un réacteur vertical, cylindrique, en verre, muni d'un agitateur métallique et d'un distributeur de gaz en verre fritté, on charge une poudre constituée de : 210 g de silicium, 16,4 g de CuCl, 1,64 g de $ZnCl_2$ et 0,38 g de bronze contenant 10 % en poids d'étain et 1,9 g de CsCl.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h pendant 8 heures, l'essais se déroule à pression atmosphérique.

Cet essai a produit des silanes avec une productivité ou activité moyenne de 234 g de silanes par heure et par kg de Si chargé initialement dans le réacteur.

Le mélange produit est analysé par chromatographie en phase vapeur, et il est caractérisé par :

- un % massique en MHDCS de 0,50 %,
- un % molaire moyen de DMDCS de 92,9 %.

Le ratio MTCS/DMDCS obtenu est égal à 0.039 (% pondéral / % pondéral).

La proportion de "lourds" (polysilanes) obtenue s'élève à 1,5 % en poids.

<u>EXEMPLE 3</u>

Composition catalytique : Cu/Sn/Cs/P (1029 ppm)

Dans un réacteur vertical, cylindrique, en verre, muni d'un agitateur métallique et d'un distributeur de gaz en verre fritté, on charge une poudre constituée de : 210 g de silicium, 16,4 g de CuCl et 0,38 g de bronze contenant 10 % en poids d'étain et 1,9 g de CsCl. Après amorçage de la réaction et quand les performances se sont stabilisées (soit après 4 heures de réaction), on ajoute 3 g de $Cu_3P$ contenant 7,2 % en poids de phosphore.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h. La réaction est arrêtée par l'opérateur après 4 heures de maintien à 360°C pour permettre l'ajout de $Cu_3P$ quand le réacteur a atteint la température ambiante. Une fois l'ajout effectué, le contrôle de la montée en température et l'introduction de $CH_3Cl$ sont réalisées comme précédemment.

L'essai se déroule à pression atmosphérique. L'essai est arrêté par l'opérateur après 8 heures de production de méthylchlorosilanes (MCS).

Cet essai a produit des silanes avec une productivité ou activité moyenne de 335 g de silanes par heure et par kg de Si chargé initialement dans le réacteur.

Le mélange produit est analysé par chromatographie en phase vapeur, et il est caractérisé par:

- un % massique en MHDCS de 0,15 %,
- un % molaire moyen de DMDCS de 93,3 %.

Le ratio MTCS/DMDCS obtenu est égal à 0.037 (% pondéral/ % pondéral).

La proportion de "lourds" (polysilanes) obtenue s'élève à 1,7 % en poids.

EXEMPLE 4

Composition catalytique : Cu/Zn/Sn/Cs/P (1029 ppm)

Dans un réacteur vertical, cylindrique, en verre, muni d'un agitateur métallique et d'un distributeur de gaz en verre fritté, on charge une poudre constituée de : 210 g de silicium, 16,4 g de CuCl, 1,64 g de $ZnCl_2$ et 0,38 g de bronze contenant 10 % en poids d'étain et 1,9 g de CsCl. Après amorçage de la réaction et quand les performances se sont stabilisées (soit après 4heures de réaction), on ajoute 3 g de $Cu_3P$ contenant 7,2 % en poids de phosphore.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h. La réaction est arrêtée par l'opérateur après 4 heures de maintien à 360°C pour permettre l'ajout de $Cu_3P$ quand le réacteur a atteint la température ambiante. Une fois l'ajout effectué, le contrôle de la montée en température et l'introduction de $CH_3Cl$ sont réalisées comme précédemment.

L'essai se déroule à pression atmosphérique. L'essai est arrêté par l'opérateur après 8 heures de production de méthylchlorosilanes (MCS).

Cet essai a produit des silanes avec une productivité ou activité moyenne de 235 g de silanes par heure et par kg de Si chargé initialement dans le réacteur.

Le mélange produit est analysé par chromatographie en phase vapeur, et il est caractérisé par :

- un % massique en MHDCS de 0,45 %,
- un % molaire moyen de DMDCS de 92,6 %.

Le ratio MTCS/DMDCS obtenu est égal à 0.042 (% pondéral/ % pondéral).

La proportion de "lourds" (polysilanes) obtenue s'élève à 1,5 % en poids.

ESSAI COMPARATIF :

Composition catalytique : Cu/Zn/Sn

Dans un réacteur vertical, cylindrique, en verre, muni d'un agitateur métallique et d'un distributeur de gaz en verre fritté, on charge une poudre constituée de : 210 g de silicium, 16,4 g de CuCl, 1,64 g de $ZnCl_2$ et 0,38 g de bronze contenant 10 % en poids d'étain.

On chauffe progressivement le réacteur jusqu'à 200°C sous un courant d'azote. Puis en continuant d'élever la température du réacteur, on ferme le robinet d'azote et on commence à introduire le chlorure de méthyle avec un débit, mesuré à 20°C, de 60 g/h.

La température du réacteur est régulée à 360°C et le débit de chlorure de méthyle est maintenu à 60 g/h pendant 8 heures, l'essai se déroule à pression atmosphérique.

Cet essai a produit des silanes avec une productivité ou activité moyenne de 326 g de silanes par heure et par kg de Si chargé initialement dans le réacteur.

Le mélange produit est analysé par chromatographie en phase vapeur, et il est caractérisé par :

- un % massique en MHDCS de 0,76 %,
- un % molaire moyen de DMDCS de 86,8 %.

Le ratio MTCS/DMDCS obtenu est égal à 0.074 (% pondéral/ % pondéral).

La proportion de "lourds" (polysilanes) obtenue s'élève à 3,7 % en poids.

**Revendications**

1. Utilisation d'une composition catalytique pour baisser la formation du coke indésirable lors de la mise en oeuvre d'un procédé de préparation d'alkylhalogénosilanes par réaction d'un halogénure d'alkyle avec une masse solide, dite masse de contact, formée de silicium, ladite composition catalytique comportant (α) du cuivre métallique ou un composé à base de cuivre et (β) un ensemble promoteur constitué de:

- 10 à 500 ppm (calculés en poids de métal par rapport à la masse de silicium engagée) d'un additif β1 choisi parmi l'étain, un composé à base d'étain et un mélange de ces espèces,
- 0,01 à 2 % (calculés en poids de métal par rapport à la masse de silicium engagée) d'un additif β3 choisi parmi le césium, le potassium et le rubidium, un composé à base dudit métal alcalin et un mélange de ces espèces,
- 50 à 3000 ppm (calculés en poids de phosphore élémentaire par rapport à la masse de silicium engagée) d'un additif β4 choisi parmi l'élément phosphore, un composé à base de phosphore et un mélange de ces espèces, et
- éventuellement 0,01 à 3 % (calculés en poids de métal par rapport à la masse de silicium engagée) d'un additif β2 choisi parmi le zinc métallique, un composé à base de zinc et un mélange de ces espèces

2. Utilisation selon la revendication 1 **caractérisé en ce que** l'additif β1 est l'étain métal.

3. Utilisation selon la revendication 2 **caractérisé en ce que** l'étain métallique est engagé sous forme de bronze.

4. Utilisation selon l'une quelconque des revendications 1 à 3, **caractérisé en ce que** l'additif β2 est le zinc métallique et/ou le chlorure de zinc.

5. Utilisation selon l'une quelconque des revendications 1 à 4, **caractérisé en ce que** l'additif β3 est le chlorure de césium, le chlorure de potassium, le chlorure de rubidium et/ou un mélange de ces composés.

6. Utilisation selon l'une quelconque des revendications 1 à 5, **caractérisé en ce que** l'additif β4 est le phosphure de cuivre $Cu_3P$ et/ou un alliage cuivre-phosphore.

7. Utilisation selon l'une quelconque des revendications 1 à 6, **caractérisé en ce que** la partie (α) de la composition catalytique est choisie parmi le cuivre métallique, le chlorure cuivreux et un mélange de ces composés.

**Claims**

1. Use of a catalytic composition for forcing downward the undesirable formation of coke while implementing a process for the preparation of alkylhalosilanes by reaction of an alkyl halide with a solid body, referred to as contact body, formed of silicon, said catalytic composition comprising (α) copper metal or a copper-based compound and (β) a promoter combination composed of:

- 10 to 500 ppm (calculated as weight of metal with respect to the weight of silicon involved) of an additive β7 chosen from tin, a tin-based compound and a mixture of these entities,
- 0.01 to 2% (calculated as weight of metal with respect to the weight of silicon involved) of an additive β3 chosen from cesium, potassium and rubidium, a compound based on said alkali metal and a mixture of these entities,
- optionally 50 to 3000 ppm (calculated as weight of elemental phosphorus with respect to the weight of silicon involved) of an additive β4 chosen from the element phosphorus, a phosphorus-based compound and a mixture of these entities, and
- optionally 0.01 to 3% (calculated as weight of metal with respect to the weight of silicon involved) of an additive β2 chosen from zinc metal, a zinc-based compound and a mixture of these entities.

2. Use according to Claim 1, **characterized in that** the additive β1 is tin metal.

3. Use according to Claim 2, **characterized in that** the tin metal is charged in the form of bronze.

4. Use according to any one of Claims 1 to 3, **characterized in that** the additive β2 is zinc metal and/or zinc chloride.

5. Use according to any one of Claims 1 to 4, **characterized in that** the additive β3 is cesium chloride, potassium chloride, rubidium chloride and/or a mixture of these compounds.

6. Use according to any one of Claims 1 to 5, **characterized in that** the additive β4 is copper phosphide $Cu_3P$ and/or a copper-phosphorus alloy.

7. Use according to any one of Claims 1 to 6, **characterized in that** the part (α) of the catalytic composition is chosen from copper metal, cuprous chloride and a mixture of these compounds.

**Patentansprüche**

1. Verwendung einer katalytisch wirksamen Zusammensetzung zur Senkung der unerwünschten Bildung von Koks bei der Durchführung eines Verfahrens zur Herstellung von Alkylhalogensilanen durch Umsetzung eines Alkylhalogenids mit einer als Kontaktmasse bezeichneten festen Masse aus Silicium, wobei die katalytisch wirksame Zusammensetzung (α) metallisches Kupfer oder eine Verbindung auf Basis von Kupfer und (β) eine Promotorkombination, bestehend aus:

   - 10 bis 500 ppm (berechnet als Metallgewicht, bezogen auf die eingesetzte Masse von Silicium) eines unter Zinn, einer Verbindung auf Basis von Zinn und einer Mischung dieser Spezies ausgewählten Additivs β1,
   - 0,01 bis 2% (berechnet als Metallgewicht, bezogen auf die eingesetzte Masse von Silicium) eines unter Caesium, Kalium und Rubidium, einer Verbindung auf Basis des Alkalimetalls und einer Mischung dieser Spezies ausgewählten Additivs β3,
   - 50 bis 3000 ppm (berechnet als Gewicht von elementarem Phosphor, bezogen auf die eingesetzte Masse von Silicium) eines unter dem Element Phosphor, einer Verbindung auf Basis von Phosphor, und einer Mischung dieser Spezies ausgewählten Additivs β2 und
   - gegebenenfalls 0,01 bis 3% (berechnet als Metallgewicht, bezogen auf die eingesetzte Masse von Silicium) eines unter metallischem Zink, einer Verbindung auf Basis von Zink und einer Mischung dieser Spezies ausgewählten Additivs β2,

   umfaßt.

2. Verwendung nach Anspruch 1, **dadurch gekennzeichnet, daß** es sich bei dem Additiv β1 um Zinnmetall handelt.

3. Verwendung nach Anspruch 2, **dadurch gekennzeichnet, daß** das metallische Zinn in Form von Bronze eingesetzt wird.

4. Verwendung nach einem der Ansprüche 1 bis 3, **dadurch gekennzeichnet, daß** es sich bei dem Additiv β2 um metallisches Zink und/oder zinkchlorid handelt.

5. Verwendung nach einem der Ansprüche 1 bis 4, **dadurch gekennzeichnet, daß** es sich bei dem Additiv β3 um Caesiumchlorid, Kaliumchlorid, Rubidiumchlorid und/oder eine Mischung dieser Verbindungen handelt.

6. Verwendung nach einem der Ansprüche 1 bis 5, **dadurch gekennzeichnet, daß** es sich bei dem Additiv β4 um Kupferphosphid $Cu_3P$ und/oder eine Kupfer-Phosphor-Legierung handelt.

7. Verwendung nach einem der Ansprüche 1 bis 6, **dadurch gekennzeichnet, daß** der Teil (α) der katalytisch wirksamen Zusammensetzung unter metallischem Kupfer, Kupfer(I)-chlorid und einer Mischung dieser Verbindungen ausgewählt ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2380995 A
- US 2464033 A
- US 2403370 A
- US 2427605 A
- GB 1207466 A
- GB 907161 A
- SU 307650 A
- US 4762940 A
- EP 0138678 A

- EP 0138679 A
- US 4601102 A
- WO 2004063205 A
- EP 1569944 A1
- EP 1569945 A1
- US 2449821 A
- US 2389931 A
- FR 1545407 A

**Littérature non-brevet citée dans la description**

- **Walter NOLL.** Chemistry and Technology of Silicones. Académie Press Inc, 1968, 26-41

- *Journal of Catalysis,* 1996, vol. 161, 861-886